# FASCICULE DE BREVET EUROPEEN

(11) **EP 3 253 608 B1**
(45) Date de publication et mention de la délivrance du brevet: **19.12.2018**
(21) Numéro de dépôt: 16702171.6
(22) Date de dépôt: 06.01.2016
(51) Int. Cl.: B60K 17/10, B60K 17/356, F04B 1/12, F04B 1/20, F04B 1/32, F03C 1/28, F03C 1/32, F03C 1/40

(54) **ENSEMBLE DE TRACTION POUR VÉHICULE HYBRIDE COMPRENANT UNE MACHINE HYDRAULIQUE DISPOSÉE AUTOUR DE L'ARBRE DE SORTIE D'UN DIFFÉRENTIEL**
ANTRIEBSANORDNUNG FÜR EIN HYBRIDFAHRZEUG MIT EINER UM DIE ABTRIEBSWELLE EINES DIFFERENZIALS ANGEORDNETEN HYDRAULISCHEN MASCHINE
TRACTION ASSEMBLY FOR A HYBRID VEHICLE COMPRISING A HYDRAULIC MACHINE ARRANGED AROUND THE OUTPUT SHAFT OF A DIFFERENTIAL

(30) Priorité: 06.02.2015 FR 1550977
(43) Date de publication de la demande: 13.12.2017
(73) Titulaire: Technoboost, 75116 Paris (FR)
(72) Inventeur: GIANNONI, Marc, 75009 Paris (FR); BARBOSA PEREIRA, Victor, 95160 Montmorency (FR); WASCHEUL, Michael, 78260 Achères (FR)
(74) Mandataire: Fernandez, Francis Lionel
(86) Numéro de dépôt international: PCT/FR2016/050013
(87) Numéro de publication internationale: WO 2016/124828

(56) Documents cités:
- DE-A1-102011 118 111
- FR-A1- 2 987 318
- US-A- 5 310 388
- US-A1- 2007 117 670

## Description

La présente invention concerne un ensemble de traction hydraulique pour un véhicule automobile hybride, ainsi que des procédés de fonctionnement de cet ensemble, et un véhicule automobile hybride équipé d'un tel ensemble.

Les véhicules hybrides comportent généralement un moteur thermique alimenté par un carburant, formant une motorisation principale, et une deuxième motorisation auxiliaire reliée à une réserve d'énergie auxiliaire, qui peut fonctionner en moteur en consommant cette énergie, ou à l'inverse fonctionner en génératrice en produisant une énergie rechargeant cette réserve lors des freinages du véhicule. L'énergie auxiliaire peut être en particulier l'électricité, une pression hydraulique ou un volant d'inertie

Ces véhicules hybrides présentent généralement plusieurs modes de fonctionnement, comprenant un mode comportant une traction par le moteur thermique, un mode zéro émission appelé « ZEV » comportant une traction uniquement avec la motorisation auxiliaire, un mode combiné appelé « Boost » comportant une traction avec les deux motorisations pour disposer d'une puissance maximale, et un mode freinage freinant le véhicule avec une récupération d'énergie rechargeant la réserve d'énergie auxiliaire.

Un type de véhicule hybride hydraulique connu, appelé hybride série, comporte un moteur thermique entraînant une première machine hydraulique, qui alimente un accumulateur de pression ainsi qu'une deuxième machine hydraulique liée aux roues. La puissance totale fournie étant transmise entièrement par le fluide, il faut un système hydraulique capable de transmettre des puissances importantes, qui est lourd, encombrant et cher. De plus le rendement est médiocre dans certaines conditions d'utilisation comme les cycles extra-urbains.

Un autre type de véhicule hybride hydraulique connu, appelé hybride parallèle, présenté notamment par le document FR-A1-2973302, comporte un moteur thermique entraînant une transmission mécanique, qui reçoit sur son carter deux machines hydrauliques permettant de réaliser différents modes de fonctionnement.

On a dans ce cas des problèmes d'encombrement des machines hydrauliques fixées sur la transmission, qu'il faut loger dans le compartiment moteur du véhicule, imposant des limitations aux dimensions de ces machines. On peut pour obtenir une puissance plus importante des machines hydrauliques dans un encombrement défini, augmenter la pression de fonctionnement ou la vitesse de rotation de ces machines, ce qui pose alors des problèmes acoustiques qui deviennent gênant pour le confort du véhicule.

Par ailleurs un ensemble de traction connu, présenté notamment par le document FR-B1-2987318, selon le préambule de la revendication 1, comporte deux machines hydrauliques disposées de manière opposée de chaque côté d'un différentiel à pignons coniques d'une transmission entraînant les deux roues motrices d'un véhicule, et disposées suivant l'axe de ce différentiel.

Chaque machine hydraulique comporte un barillet lié en rotation au boîtier du différentiel, recevant des pistons dans des cylindres disposés parallèlement autour de l'axe de ce barillet. Le barillet s'incline autour d'un point axial pour régler la cylindrée. Les pistons ayant une extrémité liée au corps du différentiel, et restant dans un même plan transversal, comportent alors un mouvement axial par rapport aux cylindres des barillets, entraînant un déplacement du fluide.

On obtient deux machines hydrauliques pouvant fonctionner en moteur ou en pompe, qui sont liées en permanence au différentiel, et donc aux roues motrices. Cette disposition peut être intéressante pour un véhicule hybride série, mais n'est pas adaptée pour un véhicule hybride parallèle car elle ne peut pas éviter une rotation permanente des machines hydrauliques générant des frottements et des pertes, alors que certains modes de fonctionnement n'utilisent pas ces machines.

De plus l'inclinaison du barillet autour d'un point axial peut être difficile à réaliser, et nécessite un espace autour de ce barillet qui peut donner un encombrement important à la machine.

La présente invention a notamment pour but d'éviter ces inconvénients de la technique antérieure.

Elle propose à cet effet un ensemble de traction hydraulique prévu pour un véhicule automobile hybride équipé d'un moteur thermique, comprenant au moins une machine hydraulique disposée autour d'un arbre de sortie d'un différentiel d'entraînement des roues du véhicule, présentant un axe principal, cette machine comportant un barillet contenant des cylindres recevant des pistons disposés parallèlement autour de l'axe, remarquable en ce que le différentiel comporte un élément recevant la puissance du moteur thermique, en ce que le barillet comporte une position qui est fixe, la machine hydraulique comprenant un plateau fixe en rotation et inclinable pour commander les courses des pistons, et en ce que le barillet est relié au boîtier du différentiel par un embrayage piloté.

Un avantage de cet ensemble de traction est que l'on obtient une machine hydraulique formant avec le différentiel un ensemble compact, cette machine pouvant entraîner directement le boîtier du différentiel et donc les roues motrices avec un bon rendement, tout en permettant un découplage de la machine dans le cas où elle n'est pas utilisée, la puissance venant du moteur thermique et s'appliquant sur le différentiel, afin d'éviter les frottements inutiles et d'augmenter le rendement du véhicule.

L'ensemble de traction hydraulique selon l'invention peut de plus comporter une ou plusieurs des caractéristiques suivantes, qui peuvent être combinées entre elles.

Avantageusement, l'embrayage est axialement disposé entre le différentiel et la machine hydraulique.

Dans ce cas, l'ensemble de traction comporte avantageusement un arbre intermédiaire creux entourant l'arbre de sortie, qui relie l'embrayage et la machine hydraulique.

En particulier, l'extrémité avant de l'arbre intermédiaire peut comporter des cannelures axiales recevant des dentures des disques de l'embrayage.

Avantageusement, l'ensemble de traction comporte deux volumes distincts séparés par des joints d'étanchéité, recevant l'huile de lubrification du différentiel et le fluide hydraulique.

Selon un mode de réalisation, l'ensemble de traction comporte deux machines hydrauliques disposées chacune d'un côté du différentiel.

Dans ce cas, avantageusement les deux embrayages des deux machines hydrauliques comportent chacun une commande de serrage indépendante.

L'invention a aussi pour objet un procédé de contrôle d'un ensemble de traction comprenant deux machines hydrauliques, qui pour des modes de fonctionnement utilisant une seule machine hydraulique, alterne l'utilisation de l'une ou de l'autre machine, afin de répartir au mieux les temps d'utilisation et donc les usures de ces machines.

L'invention a de plus pour objet un procédé de contrôle d'un ensemble de traction comprenant l'une quelconque des caractéristiques précédentes, qui pour un mode de fonctionnement donnant une avance lente du véhicule quand le conducteur relâche la pédale de frein, sans accélérer, commande un glissement de l'embrayage afin de filtrer les irrégularités de couple délivré par la machine hydraulique.

L'invention a de plus pour objet un véhicule automobile hybride utilisant une énergie hydraulique, équipée d'un moteur thermique relié à une transmission entraînant le différentiel de sortie d'un ensemble de traction hydraulique comprenant l'une quelconque des revendications précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue en coupe axiale d'un ensemble de traction hydraulique selon l'invention ;
- la figure 2 est une vue de détail d'une des machines hydrauliques de cet ensemble ; et
- la figure 3 est une vue extérieure de cet ensemble.

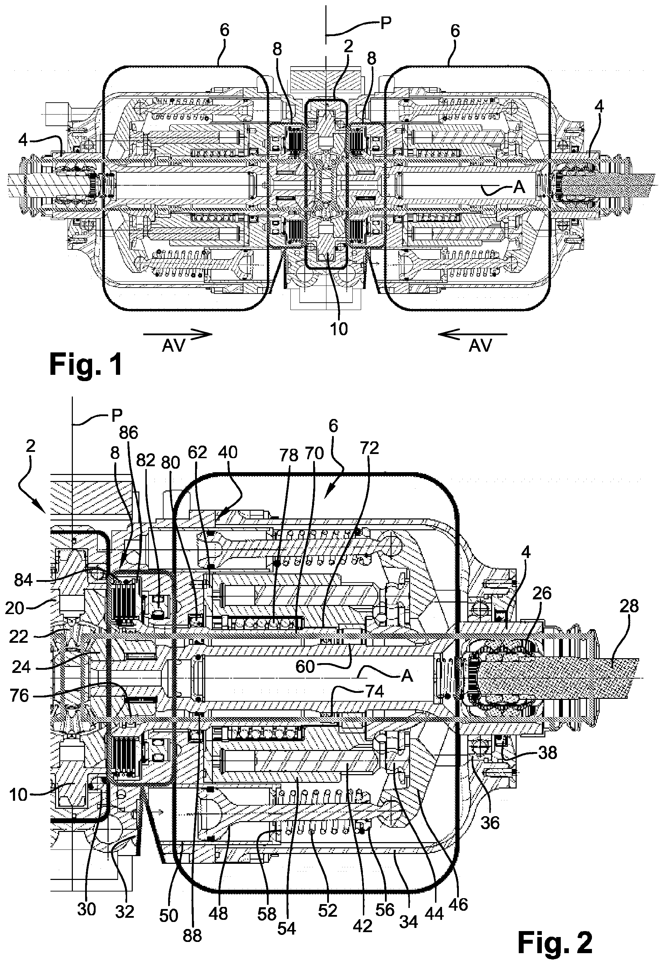

La figure 1 présente un ensemble de traction symétrique par rapport à un plan de symétrie P, comprenant un différentiel central à pignons coniques 2 qui répartit le mouvement vers deux arbres de sortie 4 disposés suivant un axe principal A, reliés chacun à une roue motrice d'un train d'un véhicule hybride.

Une machine hydraulique 6 disposée de chaque côté du différentiel 2, entraîne le boîtier de ce différentiel par un embrayage 8. Par convention de chaque côté du plan de symétrie P, le côté avant indiqué par la flèche notée « AV », est celui tourné vers ce plan de symétrie.

Le boîtier du différentiel 2 comporte une couronne à denture extérieure l'entourant 10, qui est reliée à une transmission non représentée, entraînée par un moteur thermique, permettant de transmettre aux roues motrices la puissance de ce moteur en plus de celle délivrée par les machines hydrauliques 6.

La figure 2 présente le boîtier 20 du différentiel 2, comportant à l'intérieur suivant un axe disposé dans le plan de symétrie P, deux pignons satellites opposés 22 qui engrènent axialement de chaque côté avec un pignon planétaire de sortie 24 fixé sur l'extrémité de l'arbre de sortie 4 qui est creux.

L'extrémité arrière de l'arbre de sortie 4 comporte dans son creux intérieur, un joint homocinétique 26 qui entraîne un arbre de roue 28 relié à une roue motrice.

Le boîtier du différentiel 20 est maintenu par deux roulements à billes à contacts obliques 30, dans un carter de différentiel 32 formé par deux parties sensiblement symétriques reliées par un plan de joint disposé dans le plan de symétrie P.

Le carter de différentiel 32 comporte de chaque côté une face transversale arrière 40 recevant l'appui d'un carter de machine hydraulique 34 formant sensiblement une cloche, qui se termine du côté arrière par un palier débouchant contenant un roulement à billes 36 de guidage de l'extrémité arrière de l'arbre de sortie 4, puis un joint d'étanchéité dynamique de cet arbre 38.

Chaque machine hydraulique 6 comporte un barillet 54 comprenant une série de cylindres parallèles entourant l'axe A, recevant chacun un piston 42 dont l'extrémité arrière est en appui sur un plateau inclinable 46 par un patin à tête sphérique 44.

Le carter de différentiel 32 supporte pour chaque machine hydraulique 6 deux cylindres 50 disposés parallèlement à l'axe A, en deux points opposés à l'extérieur du barillet 54, recevant chacun un piston d'inclinaison 48 comprenant une tige se terminant par une rotule arrière emboîtée dans un creux correspondant du plateau inclinable 46, pour régler son inclinaison.

Chaque piston d'inclinaison 48 reçoit autour de sa tige un ressort hélicoïdal 52 prenant appui du côté arrière sur une butée 56 fixée à cette tige, et du côté avant sur un couvercle 58 appuyé sur l'extrémité arrière du cylindre 50, de manière à appliquer une force de sortie de ce piston.

La face transversale avant de chaque barillet 54 est en appui sur une plaque lisse de distribution appelée aussi glace 62, elle-même en appui sur une face transversale du carter de différentiel 32, comprenant des perçages d'entrée et de sortie du fluide sous pression alimentant les pistons 42. Chaque barillet 54 reçoit du côté arrière dans son alésage central, un roulement à rouleaux 60 tournant sur le contour extérieur de l'arbre de sortie 4, afin de centrer ce barillet en reprenant les efforts transversaux provenant des moments d'encastrement des pistons 42 dans le barillet quand le plateau 46 est incliné.

Un arbre intermédiaire creux 70 disposé autour de chaque arbre de sortie 4, comporte vers l'arrière des cannelures extérieures 72 en prise avec des cannelures correspondantes intérieures du barillet 54. L'arbre intermédiaire creux 70 reçoit à l'intérieur, à l'arrière un roulement à billes 74 de centrage sur l'arbre de sortie 4, et à l'avant un roulement à billes 76 de centrage sur un manchon entourant cet arbre de sortie, qui assure aussi un calage axial de l'arbre intermédiaire.

Un ressort hélicoïdal 78 inséré entre le barillet 54 et l'arbre intermédiaire creux 70, prend appui du côté arrière sur cet arbre intermédiaire et du côté avant sur ce barillet, pour appliquer en permanence une pression de la face avant transversale de ce barillet sur la plaque de distribution 62 afin d'assurer une étanchéité entre ces éléments, en particulier dans les phases de démarrages.

Un premier joint dynamique d'étanchéité 80 disposé en avant du ressort hélicoïdal 78, assure l'étanchéité entre un alésage intérieur du boîtier de différentiel 20 et le contour extérieur de l'arbre intermédiaire 70, un deuxième joint 88 assurant l'étanchéité entre cet arbre et l'arbre de sortie 4, afin de séparer l'huile de lubrification du différentiel disposé dans le volume situé à gauche, et le fluide du circuit hydraulique remplissant le volume situé à droite. De cette manière on distingue les deux fluides qui sont optimisés chacun pour leur usage.

L'embrayage 8 comporte une série de disques à dentures externes engagées dans des cannelures axiales correspondantes du boîtier de différentiel 20, intercalés avec une série de disques à dentures internes engagées dans des cannelures axiales correspondantes formées à l'extrémité avant de l'arbre intermédiaire 70.

Le carter de différentiel 32 comporte un creux recevant un piston annulaire 82 tourné vers l'embrayage, comportant deux joints d'étanchéité intérieur et extérieur afin de serrer l'empilage des disques d'embrayage à partir d'une pression de commande reçue dans une chambre annulaire disposée du côté arrière de ce piston.

On obtient ainsi dans un premier état de fonctionnement où l'embrayage 8 n'est pas serré par son piston annulaire 82, une désolidarisation de l'arbre intermédiaire 70 et du barillet 54 par rapport au boîtier du différentiel 20, et dans un deuxième état où cet embrayage est serré par le piston soumis à une pression de commande, un entraînement en rotation de l'arbre intermédiaire et du barillet, la machine hydraulique 6 étant ainsi directement liée en rotation au boîtier du différentiel.

Le rappel en arrière du piston annulaire 82 après sa commande, pour éviter un frottement résiduel des disques de l'embrayage 8 quand ils ne sont pas serrés, est assuré par un ressort hélicoïdal axial 84 disposé radialement à l'extérieur de ces disques, prenant appui vers l'avant sur le corps du boitier de différentiel 20, et vers l'arrière sur un plateau presseur 86 disposé après le dernier disque. Une butée à aiguilles est intercalée entre le plateau presseur 86 et le piston annulaire 82, pour transmettre la poussée de ce piston en permettant une rotation des disques.

En réalisant deux commandes de pression indépendantes pour chaque piston annulaire 82 des deux embrayages 8 entraînant chacun une machine hydraulique 6, on peut ainsi réaliser suivant le niveau de couple moteur ou de freinage nécessaire, l'entraînement d'une ou de deux machines afin d'optimiser le fonctionnement de ces machines pour répondre à la demande du conducteur tout en réduisant la consommation d'énergie.

Selon un mode de réalisation, l'ensemble de traction hydraulique comprenant le différentiel 2, est installé en sortie d'une transmission du type manuel ou automatique, utilisée couramment sur les véhicules comprenant un moteur thermique disposé transversalement.

Dans ce cas la couronne dentée du différentiel 10 peut être entraînée directement par un pignon fixé sur l'arbre de sortie de la transmission, qui est généralement l'arbre secondaire dans le cas d'une transmission à deux arbres parallèles. En variante pour des questions d'encombrement, la couronne dentée 10 peut être entraînée par un pignon intermédiaire qui est lui-même directement entraîné par le pignon fixé sur l'arbre secondaire, afin d'éloigner l'axe principal du différentiel A de cet arbre secondaire, notamment pour loger les machines hydrauliques 6.

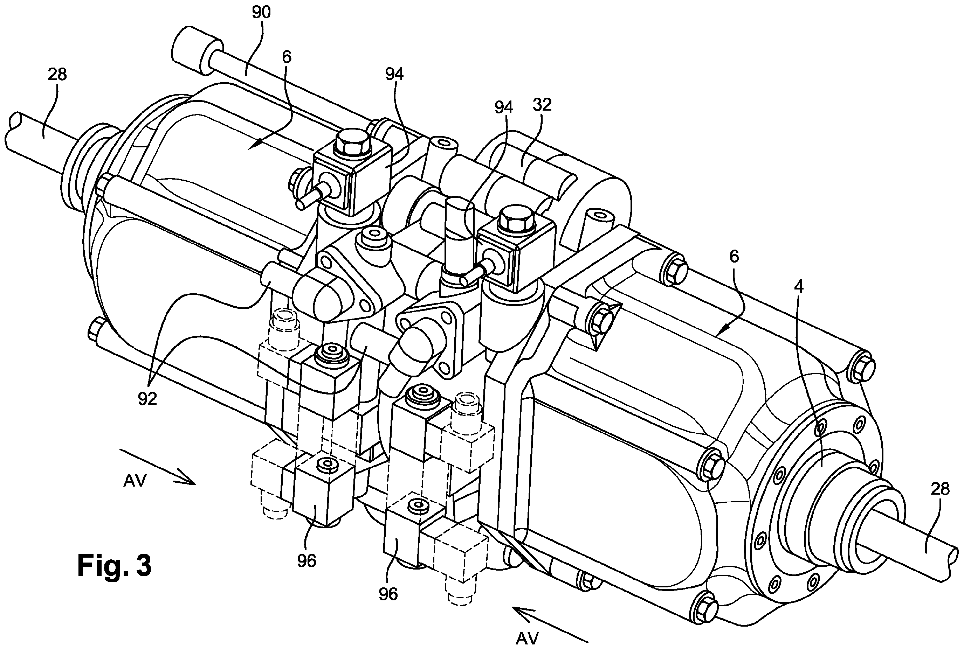

La figure 3 présente un ensemble de traction hydraulique comprenant un arbre de liaison avec la sortie de la transmission 90 disposé parallèlement à l'axe A, recevant le mouvement de cette transmission par son extrémité arrière, et le transmettant au différentiel 2 par un pignon fixé sur son extrémité avant, qui engrène directement sur la couronne dentée du différentiel 10.

Le carter du différentiel 32 supporte de manière regroupée au centre de l'ensemble de traction, une entrée et une sortie 92 du fluide hydraulique alimentant les deux machines hydrauliques 6, deux électrovannes 94 de commande de cette entrée et de cette sortie, deux électrovannes 96 de commande individuelle de chaque vérin de réglage de la cylindrée des machines hydrauliques, et deux électrovannes de commande individuelle de chaque embrayage 8 permettant d'accoupler suivant les besoins une seule ou les deux machines hydrauliques 6.

On obtient un ensemble de traction hydraulique compact, présentant les liaisons hydrauliques et électriques avec l'extérieur regroupées au centre de cet ensemble, ce qui les protège.

En particulier le véhicule hybride peut comporter un moteur thermique entraînant une transmission comprenant une pompe hydraulique rechargeant un accumulateur haute pression, cette transmission pouvant entraîner la pompe hydraulique et le différentiel de sortie de l'ensemble de traction hydraulique. On peut alors réaliser dans ce cas les différents modes de fonctionnement suivants.

Un premier mode de fonctionnement pour notamment le démarrage du véhicule en marche avant ou arrière, utilise une ou deux machines hydrauliques alimentées par la pression de l'accumulateur, et si nécessaire par la pression délivrée par la pompe qui est entraînée directement par le moteur thermique.

De préférence dès que possible après un démarrage avec les deux machines hydrauliques, on utilise une seule machine qui délivre un couple élevé plutôt que les deux machines délivrant un couple moyen, ce qui est généralement favorable pour le rendement. Avantageusement on alterne le fonctionnement des deux machines, de manière à répartir les temps d'utilisation et augmenter la longévité globale de l'ensemble de traction.

Si un couple élevé est nécessaire pour ce démarrage du véhicule, notamment pour un démarrage sur une forte pente, il est possible d'ajouter un couple venant du moteur thermique qui s'applique directement sur le différentiel de sortie.

Un deuxième mode de fonctionnement donnant une avance lente du véhicule en marche avant ou arrière, appelé aussi « rampage », se déclenche automatiquement quand le conducteur relâche la pédale de frein, sans accélérer. Ce mode applique un petit couple sur les roues motrices pour donner un déplacement à très basse vitesse, permettant en particulier de réaliser des manoeuvres du véhicule.

Avantageusement on utilise une ou deux machines hydrauliques pour appliquer ce couple au travers des embrayages, en commandant si nécessaire un glissement de ces embrayages afin de filtrer les irrégularités de couple données par la succession d'ouvertures des différents cylindres de ces machines.

Un troisième mode de fonctionnement sans émission de gaz polluants, appelé aussi mode « ZEV », effectue un roulage en utilisant uniquement la pression de l'accumulateur pour entraîner une ou deux machines hydrauliques en fermant leur embrayage, le moteur thermique restant à l'arrêt.

On utilise en particulier ce mode de fonctionnement pour un roulage dans les bouchons nécessitant une faible puissance. Avantageusement si possible on répartit aussi le fonctionnement alternativement sur les deux machines hydrauliques.

Un quatrième mode de fonctionnement pour les moyennes et grandes vitesses du véhicule, utilise uniquement l'énergie du moteur thermique en passant par la transmission et par le différentiel de sortie, les deux machines hydrauliques restant à l'arrêt avec leur embrayage ouvert.

On obtient ainsi en particulier pour des vitesses supérieures à environ 60km/h, un bon rendement du moteur thermique qui développe une puissance suffisante, ainsi qu'une absence de perte par frottement avec les machines hydrauliques restant à l'arrêt, et d'usure de ces machines.

Un cinquième mode de fonctionnement pour les forts couples, appelé aussi « Boost », notamment pour des accélérations importantes assurant la sécurité lors des dépassements, ajoute à la puissance délivrée par le moteur thermique sur le différentiel de sortie, une puissance délivrée par les deux machines hydrauliques avec les embrayages fermés qui prélèvent de la pression dans l'accumulateur, afin de donner un couple maximal sur les roues motrices.

Un sixième mode de fonctionnement effectuant une récupération d'énergie, applique un freinage du véhicule avec les machines hydrauliques travaillant en générateur de pression pour recharger l'accumulateur, les embrayages étant fermés. Avantageusement on privilégie le fonctionnement avec une seule machine hydraulique délivrant un couple maximum s'il est suffisant, plutôt que deux machines, afin d'obtenir un meilleur rendement.

## Revendications

1. Ensemble de traction hydraulique prévu pour un véhicule automobile hybride équipé d'un moteur thermique, comprenant au moins une machine hydraulique (6) disposée autour d'un arbre de sortie (4) d'un différentiel d'entraînement des roues du véhicule (2), présentant un axe principal (A), cette machine comportant un barillet (54) contenant des cylindres recevant des pistons (42) disposés parallèlement autour de l'axe, **caractérisé en ce que** le différentiel (2) comporte un élément (10) recevant la puissance du moteur thermique, **en ce que** le barillet (54) comporte une position qui est fixe, la machine hydraulique (6) comprenant un plateau fixe en rotation (46) et inclinable pour commander les courses des pistons (42), et **en ce que** le barillet est relié au boîtier du différentiel (20) par un embrayage piloté (8).

2. Ensemble de traction selon la revendication 1, **caractérisé en ce que** l'embrayage (8) est axialement disposé entre le différentiel (2) et la machine hydraulique (6).

3. Ensemble de traction selon la revendication 2, **caractérisé en ce qu'**il comporte un arbre intermédiaire creux (70) entourant l'arbre de sortie (4), qui relie l'embrayage (8) et la machine hydraulique (6).

4. Ensemble de traction selon la revendication 3, **caractérisé en ce que** l'extrémité avant de l'arbre intermédiaire (70) comporte des cannelures axiales recevant des dentures des disques de l'embrayage (8).

5. Ensemble de traction selon l'une quelconque des revendications précédentes, **caractérisé en ce qu'**il comporte deux volumes distincts séparés par des joints d'étanchéité (80), recevant l'huile de lubrification du différentiel et le fluide hydraulique.

6. Ensemble de traction selon l'une quelconque des revendications précédentes, **caractérisé en ce qu'**il comporte deux machines hydrauliques (6), disposées chacune d'un côté du différentiel (2).

7. Ensemble de traction selon la revendication 6, **caractérisé en ce que** les deux embrayages (8) des deux machines hydrauliques (2) comportent chacun une commande de serrage indépendante.

8. Procédé de contrôle d'un ensemble de traction selon la revendication 7, **caractérisé en ce que** pour des modes de fonctionnement utilisant une seule machine hydraulique (6), il alterne l'utilisation de l'une ou de l'autre machine.

9. Procédé de contrôle d'un ensemble de traction selon l'une quelconque des revendications 1 à 7, **caractérisé en ce que** pour un mode de fonctionnement donnant une avance lente du véhicule quand le conducteur relâche la pédale de frein, sans accélérer, il commande un glissement de l'embrayage (8) afin de filtrer les irrégularités de couple délivré par la machine hydraulique (6).

10. Véhicule automobile hybride utilisant une énergie hydraulique, équipé d'un moteur thermique relié à une transmission, **caractérisé en ce que** la transmission entraîne le différentiel de sortie (2) d'un ensemble de traction hydraulique réalisé selon l'une quelconque des revendications 1 à 7.

## Patentansprüche

1. Hydraulische Antriebsanordnung, die für ein Hybridkraftfahrzeug vorgesehen ist, das mit einer Brennkraftmaschine ausgestattet ist, die mindestens eine hydraulische Maschine (6) umfasst, die um eine Ausgangswelle (4) eines Differenzials zum Antreiben der Räder des Fahrzeugs (2) angeordnet ist, das eine Hauptachse (A) aufweist, wobei diese Maschine eine Trommel (54) umfasst, die Zylinder enthält, die Kolben (42) aufnehmen, die parallel um die Achse angeordnet sind, **dadurch gekennzeichnet, dass** das Differenzial (2) ein Element (10) umfasst, das die Leistung der Brennkraftmaschine empfängt, dass die Trommel (54) eine Position umfasst, die stationär ist, wobei die hydraulische Maschine (6) eine drehfeste Platte (46), die neigbar ist, um die Hübe der Kolben (42) zu steuern, umfasst, und dass die Trommel mit dem Gehäuse des Differenzials (20) durch eine gesteuerte Kupplung (8) verbunden ist.

2. Antriebsanordnung nach Anspruch 1, **dadurch gekennzeichnet, dass** die Kupplung (8) axial zwischen dem Differenzial (2) und der hydraulischen Maschine (6) angeordnet ist.

3. Antriebsanordnung nach Anspruch 2, **dadurch gekennzeichnet, dass** sie eine Zwischenhohlwelle (70) umfasst, die die Ausgangswelle (4), die die Kupplung (8) und die hydraulische Maschine (6) verbindet, umfasst.

4. Antriebsanordnung nach Anspruch 3, **dadurch gekennzeichnet, dass** das vordere Ende der Zwischenwelle (70) axiale Nuten umfasst, die Verzahnungen der Scheiben der Kupplung (8) aufnehmen.

5. Antriebsanordnung nach einem der vorstehenden Ansprüche, **dadurch gekennzeichnet, dass** sie zwei getrennte Volumen umfasst, die durch Dichtungen (80) getrennt sind, die das Schmieröl des Differenzial und das Hydraulikfluid empfangen.

6. Antriebsanordnung nach einem der vorstehenden Ansprüche, **dadurch gekennzeichnet, dass** sie zwei hydraulische Maschinen (6) umfasst, die jeweils auf einer Seite des Differenzials (2) angeordnet sind.

7. Antriebsanordnung nach Anspruch 6, **dadurch gekennzeichnet, dass** die zwei Kupplungen (8) der zwei hydraulischen Maschinen (2) jeweils eine unabhängige Spannsteuerung umfassen.

8. Verfahren zum Steuern einer Antriebsanordnung nach Anspruch 7, **dadurch gekennzeichnet, dass** es für Betriebsmodi, die eine einzige hydraulische Maschine (6) verwenden, den Gebrauch der einen oder der anderen Maschine abwechselt.

9. Verfahren zum Steuern einer Antriebsanordnung nach einem der Ansprüche 1 bis 7, **dadurch gekennzeichnet, dass** es für einen Betriebsmodus, der ein langsames Vorwärtsfahren des Fahrzeugs ergibt, wenn der Fahrer das Bremspedal freigibt, ohne zu beschleunigen, ein Schlupfen der Kupplung (8) steuert, um die Unregelmäßigkeiten von Drehmoment, das von der hydraulischen Maschine (6) geliefert wird, filtert.

10. Hybridkraftfahrzeug, das eine hydraulische Energie verwendet, das mit einer Brennkraftmaschine ausgestattet ist, die mit einem Getriebe verbunden ist, **dadurch gekennzeichnet, dass** das Getriebe das Ausgangsdifferenzial (2) einer hydraulischen Antriebsanordnung, die gemäß einem beliebigen der Ansprüche 1 bis 7 hergestellt ist, antreibt.

## Claims

1. A hydraulic traction assembly provided for a hybrid motor vehicle equipped with a heat engine, including at least one hydraulic machine (6) arranged around an output shaft (4) of a differential for driving the wheels of the vehicle (2), having a main axis (A), this machine comprising a barrel (54) containing cylinders receiving pistons (42) arranged in a parallel manner around the axis, **characterized in that** the differential (2) comprises an element (10) receiving the power of the heat engine, **in that** the barrel (54) comprises a position which is fixed, the hydraulic machine (6) including a plate (46) which is fixed with regard to rotation and is able to be inclined to control the strokes of the pistons (42), and **in that** the barrel is connected to the housing of the differential (20) by an automatic clutch (8).

2. The traction assembly according to claim 1, **characterized in that** the clutch (8) is axially arranged between the differential (2) and the hydraulic machine (6).

3. The traction assembly according to claim 2, **characterized in that** it comprises an intermediate hollow shaft (70) surrounding the output shaft (4), which connects the clutch (8) and the hydraulic machine (6).

4. The traction assembly according to claim 3, **characterized in that** the front end of the intermediate shaft (70) comprises axial grooves receiving teeth of the discs of the clutch (8).

5. The traction assembly according to any one of the preceding claims, **characterized in that** it comprises two distinct volumes separated by gaskets (80) receiving the lubricating oil of the differential and the hydraulic fluid.

6. The traction assembly according to any one of the preceding claims, **characterized in that** it comprises two hydraulic machines (6), each arranged on a side of the differential (2).

7. The traction assembly according to claim 6, **characterized in that** the two clutches (8) of the two hydraulic machines (2) each comprise an independent tightening command.

8. A method for controlling a traction assembly according to claim 7, **characterized in that** for modes of operation using a single hydraulic machine (6) it alternates the use of one or the other machine.

9. A method for controlling a traction assembly according to any one of claims 1 to 7, **characterized in that** for a mode of operation giving a slow advance of the vehicle when the driver releases the brake pedal, without accelerating, it commands a slipping of the clutch (8) so as to filter the torque irregularities delivered by the hydraulic machine (6).

10. A hybrid motor vehicle using hydraulic energy, equipped with a heat engine connected to a transmission, **characterized in that** the transmission drives the output differential (2) of a hydraulic traction assembly realized according to any one of claims 1 to 7.
